Europäisches Patentamt

European Patent Office

Office européen des brevets

(19)

(11) Numéro de publication: **0 299 812**
**A1**

(12)

# DEMANDE DE BREVET EUROPEEN

(21) Numéro de dépôt: **88401449.9**

(22) Date de dépôt: **13.06.88**

(51) Int. Cl.⁴: **B 62 D 65/00**

(30) Priorité: **16.06.87 FR 8708389**

(43) Date de publication de la demande:
**18.01.89 Bulletin 89/03**

(84) Etats contractants désignés:
**AT BE CH DE ES GB IT LI LU NL SE**

(71) Demandeur: **Boyenval, Hugues**
**3, rue du Moulin**
**F-21380 Messigny et Vantoux (FR)**

(72) Inventeur: **Boyenval, Hugues**
**3, rue du Moulin**
**F-21380 Messigny et Vantoux (FR)**

(74) Mandataire: **Bruder, Michel**
**10 rue de la Pépinière**
**F-75008 Paris (FR)**

(54) Procédé modulaire de démontage de véhicules automobiles légers.

(57) La présente invention concerne un procédé modulaire de démontage de véhicules automobiles légers pour la récupération de leurs pièces détanchées et leur recyclage dans un réseau organisé.

Ce procédé est caractérisé en ce que par module, la somme des temps de test de convoyage, de démontage, de récupération, de tri, de contionnement et de stockage des pièces de presse et d'évacuation des carcasses, rapportée au nombre de véhicules (2) traités, quelque soit leur état au départ, reste constante sur une période déterminée au moyen :

- d'une part, d'une ligne de convoyage (3) des véhicules automobiles légers (2) faisant se succéder des postes de démontages par lot de pièces (19,26,27,28,30,32) et non par pièces unitaires ;

- et d'autre part, d'une logistique assurant l'approvisionnement de chaque poste suivant la demande de l'opérateur indépendamment de l'opérateur du poste précédent.

Fig. 5

## Description

La présente invention concerne un procédé modulaire de démontage de véhicules automobiles légers pour la récupération et le recyclage de leurs pièces détachées en vue de leur valorisation économique.

Il y a plus d'1 200,000 véhicules légers à détruire chaque année, seuelement en France. On connaît d'ailleurs bien les artisans de cette destruction qu'on peut sommairement classer de la manière suivante :

- les démolisseurs, qui sont généralement insuffisamment équipés pour faire face à l'ensemble du problème ;

- les ferrailleurs, qui n'interviennent dans la démolition automobile que lorsque les cours des métaux et de la ferraille le justifient ;

- les garagistes, qui démontent quelques voitures pour l'entretien de leur parc d'occasion ; néanmoins, et compte tenu des prescriptions des constructeurs d'une part, du prix des terrains ou des préoccupations d'environnement d'autre part, les garagistes hésitent de plus en plus à accumuler des épaves ;

- les particuliers, qui effectuent des "casses sauvages" qui ne sont ni recensées, ni recensables et échappent à tous les circuits normaux du commerce et de contrôle, engendrant une concurrence déloyale pour les démolisseurs, une insécurité pour l'environnement et plus généralement une précarité de la profession, la discréditant fortement auprès du public.

Par ailleurs, on connaît aussi tous les inconvénients du système actuel de la démolition automobile telle qu'elle est pratiquée par les professionnels :

On citera d'abord les énormes pertes ou dépréciations de matériel tenant au seul stockage des véhicules en extérieur dont la moyenne actuelle est de 6 mois par véhicule (blocage des moteurs, des circuits de freinage, pourriture des selleries, corrosion, gel, casse des parebrise etc...).

A ces pertes s'ajoutent les difficultés de démontages et de manutention effectués en extérieur dans un environnement peut adapté ; en outre, il est difficile d'évaluer les pertes dues au vol ou au vandalisme en tout genre.

D'autres inconvénients ressortent du système actuel qui se préoccupe plus d'empiler que de gérer ; aucun stock de véhicules ou de pièces détachées n'est aujourd'hui réellement comptabilisé, alors qu'on estime à plus de 50 000 le nombre de références qu'il conviendrait de traiter automatiquement. Les conditions précaires du travail de démolition dans des ateliers mal équipés ou sur des chantiers totalement inconfortables aggravent considérablement les difficultés d'une profession qui ignore en plus les bases élémentaires de la vente : pas de structure d'accueil, pas de tarif, pas de catalogue et même parfois pas de service notamment pour le démontage d'une pièce sur un véhicule... Si l'on ajoute enfin, l'incontestable impact de cette profession sur l'environnement, qu'il s'agisse de problèmes d'esthétique ou d'écologie, tenant à la pollution des nappes par les rejets des huiles, il en résulte d'énormes pertes de substances tenant à l'inorganisation d'une profession aujourd'hui totalement dépassée par son produit et son marché, et déconsidérée par sa clientèle qu'il convenait donc de reconquérir.

Pour pallier tous les inconvénients du système actuel, il apparaît donc la nécessité d'un procédé très industrialisé pour la démolition des véhicules, d'une part, pour absorber la quantité annuelle des véhicules à "casser" et d'autre part, pour en récupérer les pièces détachées, et plus généralement, tous les produits susceptibles d'un recyclage économique. Il est ainsi proposé un procédé de démontage de véhicules mettant en oeuvre un module de base pouvant par exemple traiter une quantité constante de véhicules par jour, étant observé qu'à l'inverse du montage d'un véhicule neuf, il est illusoire de prédéterminer des temps opératoires pour le démontage d'un véhicule usagé :

On comprend, en effet, que suivant l'état d'un véhicule suivant qu'il est ou non accidenté par exemple, les opérations de démontage et de récupération des pièces qui en découle pourraient varier considérablement, non seulement en temps, mais aussi en nombre, on reconnaît ici la principale difficulté structurelle qui a toujours cantonné les professionnels concernés dans un artisanat totalement inadapté. Pour vaincre cette difficulté, le module de base suivant l'invention se caractérise en ce que la somme des temps de test, de convoyage, de démontage, de récupération, de tri, de conditionnement et de stockage des pièces, de presse et d'évacuation des carcasses, rapportée au nombre de véhicules traités, quelque soit leur état au départ, reste constante sur une période déterminée au moyen :

- d'une part, d'une ligne de convoyage des véhicules automobiles légers faisant se succéder des postes de démontage par lot de pièces et non par pièce unitaires,

- et, d'autre part, d'une logistique assurant l'approvisionnement de chaque poste suivant la demande de l'opérateur indépendamment de l'opérateur du poste précédent.

Dans ce contexte, et pour la mise en oeuvre d'un tel procédé dans des conditions économiques particulièrement avantageuses tenant à l'extrême réduction des surfaces occupées par le dispositif industriel qui réduit les coûts d'acquisition de construction et plus sérieusement les coûts d'exploitation (coût d'énergie, de circulation interne, de liaison, de surveillance, de gestion, etc...), on a prévu une structure comportant trois niveaux fonctionnels superposés tels que :

- toutes les opérations de convoyage des véhicules automobiles légers s'effectuent au 3e niveau, par des convoyeurs aériens suspendus à la charpente de la structure, déplaçant les véhicules automobiles légers d'un poste de démontage à un autre, hormis d'une part l'amenée desdits véhicules automobiles légers auxdits postes qui se effectuée de préférence par ascenseur du type convoyeur à section élévatrice verticale, et hormis d'autre par les opérations de chargement et de déchargement des véhicules automobiles légers qui sont effectuées au sol ;

- toutes les opérations de démontage, lavage éventuel et convoyage de pièces détachées sont effectuées au niveau intermédiaire ;

- toutes les opérations lourdes de stockage des pièces détachées et de presse des carcasses démontées sont effectuées au niveau du sol, permettant ainsi une structure compacte plus légère et une offre en vente des pièces détachées facilitée et rationnelle.

Il est alors possible d'effectuer dans le module de base le démontage des véhicules conformément à la succession des opérations détaillées ci-après :

1.- chargement du véhicule automobile léger sur une balancelle vide et amenée dudit véhicule automobile léger sur un convoyeur aérien suspendu ;

2.- opération de test par diagnostic auditif, visuel, électronique du véhicule automobile léger et établissement informatisé de la liste de démontage avec état des pièces ;

3.- récupération des fluides et notamment des huiles et graisses, de l'essence, de l'eau avec antigel ;

4.- démontage de toutes les pièces hors moteur, boîte de vitesse, pont et roues par le même opérateur ;

5.- convoyage séparé des pièces détachées ;

6.- démontage des roues et récupération des pneus ;

7.- désacouplage des demi-train et des freins, puis du moteur, de la boîte de vitesses, du démarreur et des pièces moteurs ;

8.- lavage des pièces récupérées au poste 7 ;

9.- Sélection des produits ainsi récupérés qui sont alors conditionnés, stockés et gérés par informatique pour la préparation des commandes ;

10.- presse des carcasses restantes et évacuation vers des récupérateurs de métaux et retour des balancelles vides pour reprise du cycle.

Complémentairement au dispositif ainsi décrit, il convenait d'étudier chacune de ses étapes pour en déterminer l'importance dans l'exécution du programme de démontage des véhicules et intégrer les diverses incertitudes évoquées en préambule :

On a, pour ce faire, proposé d'effectuer la première opération de démontage correspondante à la phase 4 par un seul opérateur qui obtient ainsi une totale autonomie de travail, effectuée en outre globalement depuis le début jusqu'à la fin du démontage. Etant rappelée l'hypothèse d'une grande variabilité des temps de démontage, on a prévu de mettre en parallèle un nombre minimum de postes semblables, alimentés à la demande de chacun des opérateurs de ces postes, leur procurant le temps nécessaire et suffisant pour chaque démontage ; une zone d'accumulation, en amont de ces postes, assure par ailleurs une alimentation permanente donnant au système toute sa souplesse tout en assurant un lissage du flux de travail ; en effet, une fourchette large des temps de démontage peut aisément être établie si l'on considère le pire des cas et son inverse, grâce à laquelle, et par une étude statistique élémentaire, on peut déterminer le nombre de postes de démontage qu'il faut mettre en parallèle pour en régulariser le flux de véhicules à "casser" par unité de temps.

On notera, à cet égard, un avantage particulier du procédé qui permet, au seul préjudice des temps, des arrêts individuels d'opérateurs compensés automatiquement par les autres postes.

D'autre part, il est aussi possible de coupler plusieurs modules de base, ou fraction de ceux-ci, en les disposant en parallèle, dans une structure allongée pour ce faire, en ayant la seule contrainte de réunir entr'elles les zones tampons permettant l'accumulation et l'alimentation contrôlée des postes de démontage ; ces liaisons sont naturellement simplifiées par la technique de convoyage telle que décrite dans l'exemple qui va être donné, permettant un stationnement de véhicules sur un même rail, que chaque opérateur peut extraire au moment opportun ; ainsi, coupler plusieurs modules, ou fraction de module, revient, en fait, à allonger le rail d'alimentation d'une part, et à prolonger le rail d'évacuation d'autre part, qui n'est en réalité que le rail d'alimentation des postes opératoires suivants, et ce, jusqu'à la fin du cycle de démolition par déchargement des carcasses dans une presse et évacuation des "packs" ainsi réalisés, à destination des récupérateurs de métaux.

On comprendra mieux l'invention par la description d'une réalisation particulière mettant en oeuvre le procédé, donnée ci-après, à titre d'illustration et d'exemple préféré, sans qu'il soit limitatif, en référence aux dessins annexés dans lesquels :

- la figure 1 représente un schéma par blocs de toutes les séquences de démontage suivant le procédé depuis l'entrée des véhicules automobiles légers jusqu'à la mise en vente de leurs pièces détachées recyclées et conditionnées ;

- les figures 2,3 et 4 représentent l'implantation des postes opératoires et des convoyages des véhicules automobiles légers et des pièces détachées pour la mise en oeuvre du procédé selon l'invention, respectivement au niveau A,B et C de la structure constituant le bâtiment d'accueil dudit procédé ;

- la figure 5 est une vue schématique de la structure-bâtiment représentée en coupe verticale de sa façade avant, montrant la superposition des 3 niveaux fonctionnels du procédé selon l'invention.

- les figures 6a et 6b représentent une vue de côté et une vue de face des balancelles transportant les véhicules automobiles légers dans la ligne de convoyage des véhicules suivant le procédé.

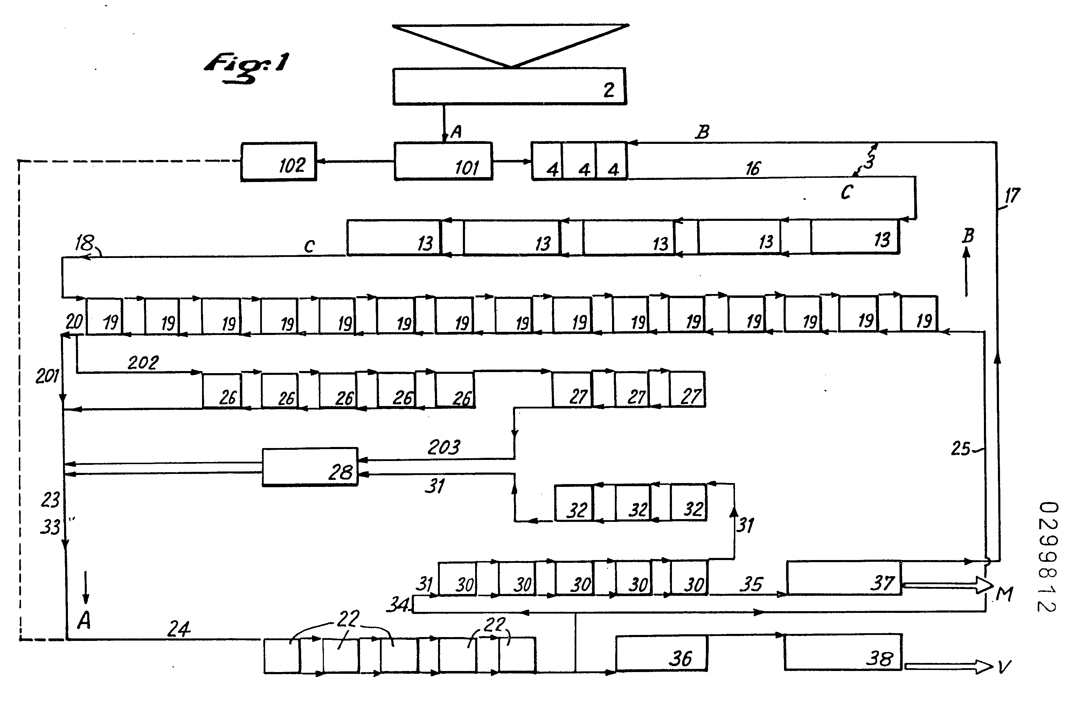

Conformément au schéma de la figure 1, l'exemple qui suit correspond au procédé de démontage et de récupération des pièces détachées pour un flux constant de 150 véhicules par période de 8 heures, soit une "casse" toutes les 3,2 minutes. Il s'agit bien entendu de véhicules à quatre roues et d'un poids inférieur à 2,5 tonnes, par la suite dénommés véhicules automobiles légers.

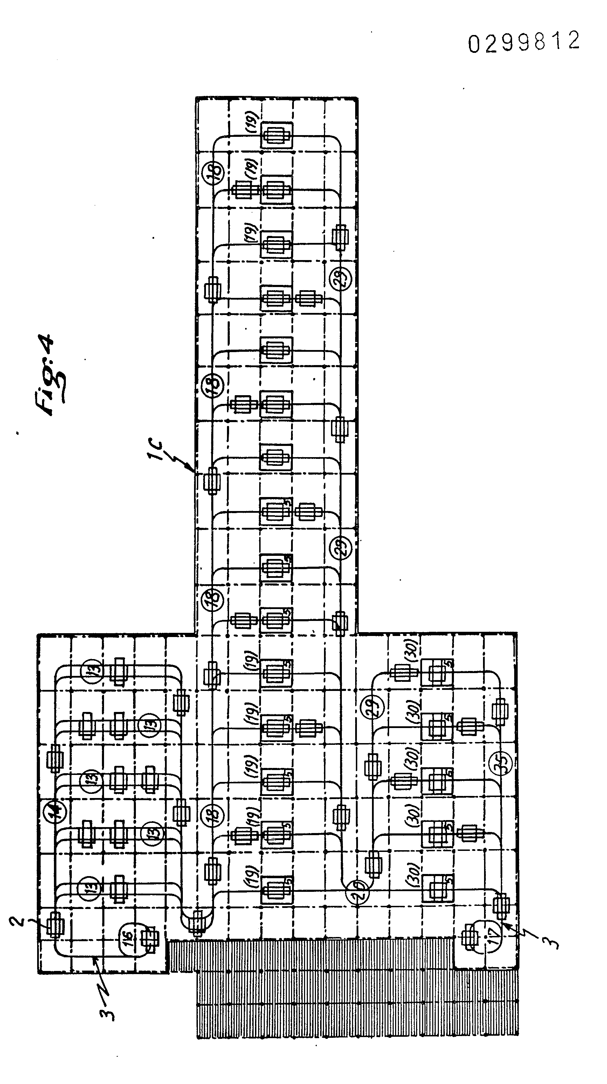

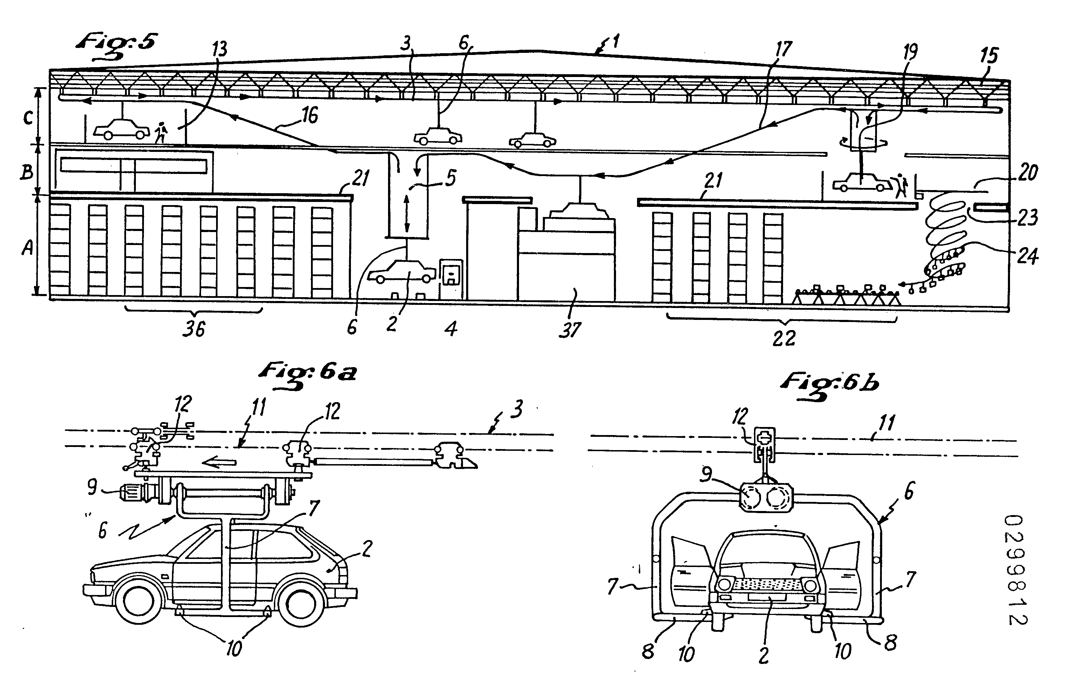

A l'entrée de la structure 1, les véhicules automobiles légers 2 subissent un premier tri 101 pour éliminer les véhicules trop endommagés qui ne pouraient s'intégrer dans la ligne de convoyage 3 des véhicules automobiles légers 2. Les véhicules écartés lors de ce tri 101 sont détournés sur un atelier annexe 102 organisé de façon classique pour effectuer une récupération de pièces qui sont évacuées vers les postes de conditionnement 22 et de stockage 36 avant vente. Pour les autres véhicules automobiles légers 2, ils sont amenés depuis le niveau A jusqu'au niveau C de la structure 1 sur trois postes du chargement 4 par le moyen d'une section élévatrice verticale 5 de la ligne de convoyage 3. Les véhicules automobiles légers 2 sont pris en charge dans le convoyage 3 par des balancelles 6 assurant le maintient des véhicules 2 et leur positionnement angulaire tant dans un même plan horizontal (pas de rotation du véhicule sur lui-même) que dans un même plan vertical (montée ou descente) ; conformément aux figures 6, les balancelles 6 sont munies de 2 bras latéraux 7 terminés par un berceau 8 venant supporter le véhicule par appui sur les bas de caisse. Les bras 7 sont tels qu'il autorisent l'ouverture des portes des véhicules 2, et ils sont articulés transversalement par une motorisation 9 pour le blocage ou le déblocage du véhicule 2; complémentairement, le berceau 8 est muni de poinçons 10 qui sont enfoncés dans la caisse des véhicules 2 assurant son positionnement définitif. Pour éviter tout balancement indésirable des balancelles 6, lors des déplacements, il est prévu un dispositif classique de rigidification comprenant entr'autre deux points d'accrochage 12 au rail 11 du convoyage 3. Arrivés au 3e niveau (C) de la structure 1, les véhicules automobiles légers 2 sont soumis à une série de tests répartis sur 5 postes 13 dont l'alimentation 14 en véhicules est commune et dépend de la demande des opérateurs sur les postes 13. A ces postes 13, sur chaque véhicules automobiles légers 2 sont effectués des contrôles classiques : visuels, auditifs, électriques, électroniques et mécaniques lorsqu'ils sont possibles, de manière à repérer chaque élément de véhicules automobiles légers 2 suivant sont état ; une codification est d'ailleurs établie à destination du démontage qui va suivre en vue de son organisation et d'une meilleure gestion des pièces recyclées. Par exemple, il sera indiqué lors des tests que tel radiateur de telle marque est percé : il est inutile par conséquent de prendre des précautions de démontage d'une part, et il conviendra d'orienter cette pièce directement à la récupération de métaux et non au stockage des pièces pour la vente. Les tests étant réalisés, et la fiche de chaque véhicules automobiles légers 2 étant établie pour le contrôle et la gestion informatisée des pièces qui en seront récupérées, les véhicules automobiles légers 2 sont entièrement convoyés au niveau C pour alimenter les postes de démontages successifs grâce à des rails 11 directement fixés à la charpente 15 du bâtiment 1 (cf. figure 5) suivant une logistique schématisée sur la figure 4 les rails 11 formant toute la ligne de convoyage 3 sont représentés en traits continus sur la figure 4 depuis la rampe d'arrivée 16 des véhicules automobiles légers 2 après les postes de chargement 4 jusqu'à la rampe de sortie 17 aboutissant à la presse 37 et au retour des balancelles 6 vides au poste de chargement 4. Les véhicules automobiles légers 2 sont représentés de manière aléatoire sur le schéma.

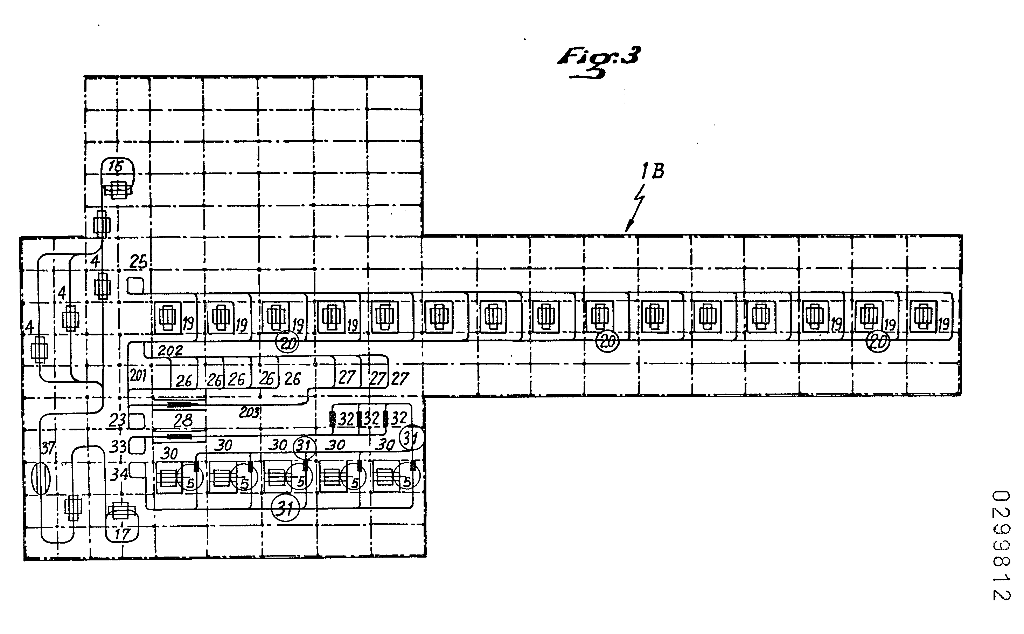

En sortie des postes 13 de tests, les véhicules automobiles légers 2 sont accumulés sur une première zone tampon 18 positionnant les véhicules automobiles légers 2 en attente au droit des postes 19 de démontage situés au niveau B, permettant aux opérateurs, suivant leur cadence propre, d'extraire un véhicule 2 de la zone 18, en le faisant descendre par un ascenseur vertical du même type que la section élévatrice verticale 5, jusqu'à son poste 19; 15 postes 19 du même type sont ainsi disposés en parallèle au centre du niveau intermédiaire B de la structure 1 (figure 3). Chaque poste 19 est équipé d'un outillage de démontage complet donnant à l'opérateur une totale autonomie ; le véhicule automobile léger 2 en cours de démontage sur un poste est maintenu par sa balancelle 6, débrayée de son système de convoyage et pouvant tourner sur lui-même librement ; l'opérateur procède alors au démontage complet du véhicule 2, laissant seulement les moteurs, les trains, les boîtes de vitesses et leurs accessoires directs. Autour de chaque poste 19, une nouvelle ligne de convoyage 20 supportée par le plancher intermédiaire 21 de la structure 1, sert à la collecte des pièces démontées qui sont disposées dans des paniers différents suivant la destination des pièces prérepérées aux postes 13 ; l'opérateur détermine lui-même l'oreintation des paniers circulant sur le convoyeur 20 au moyen de badges magnétiques par exemple qui permettront d'aiguiller les pièces directement par 201 vers la banque de stockage de pièces 22, par descente des paniers concernés au point 23 (figure 3) par un ascenseur à rampe hélécoïdale 24, les paniers vides remontant au niveau B, au point 25 suivant figure 3, ou vers les 5 postes 26 de démontage de roues et de pneus, suivis par le démontage des demi-train, des freins et des cardans sur 3 postes 27 ; les pièces sortant des postes 37 sont convoyées par 203 jusqu'à un poste de lavage 28 pour les dégraisser et les nettoyer, avant descente en banque de stockage 22 au point 23 du niveau B.

Les véhicules automobiles légers 2, après toutes les opérations de démontage effectuées aux postes 19, sont remontés au niveau C, figure 4, de la structure 1 pour rejoindre une nouvelle zone d'accumulation 29 constituée d'un rail comme pour la zone 18 pouvant recevoir en tout point un véhicule automobile léger remontant d'un poste 19.

A la demande des opérateurs concernés, la zone 29 alimente 5 postes 30 en véhicules automobiles légers 2 qui vont descendre du niveau C au niveau B par ascenseur vertical du même type que la section verticale 5 pour démontage du moteur, de la boîte de vitesses, et de leurs accessoires tels que démarreurs, alternateur, etc... pour ne laisser sur les balancelles 6 que les éléments de carrosserie des véhicules automobiles légers 2 non récupérables et constituant les carcasses. Suivant l'implantation portée en figure 3 des 5 postes 30 de démontage, les pièces ainsi récupérées sont convoyées par une nouvelle ligne 31 venant alimenter une dernière série de postes de travail 32 pour le désacouplement des moteurs et des boîtes qui, après lavage et nettoyage au poste 28 rejoindront la banque de stockage 22 par descente vers le niveau A, au point 33 du niveau B, avec retour des paniers de transport vides au point 34 du niveau B.

Les carcasses des véhicules automobiles légers 2 sont ensuite remontées au niveau C pour rejoindre une zone de regroupement 35 pour leur évacuation vers la presse 37 et leur compactage à destination des récupérateurs de métaux (flèche M, figure 1). Les balancelles 6, vidées de leurs carcasses, rejoignent le poste 4 pour chargement d'un nouveau véhicules automobiles légers 2.

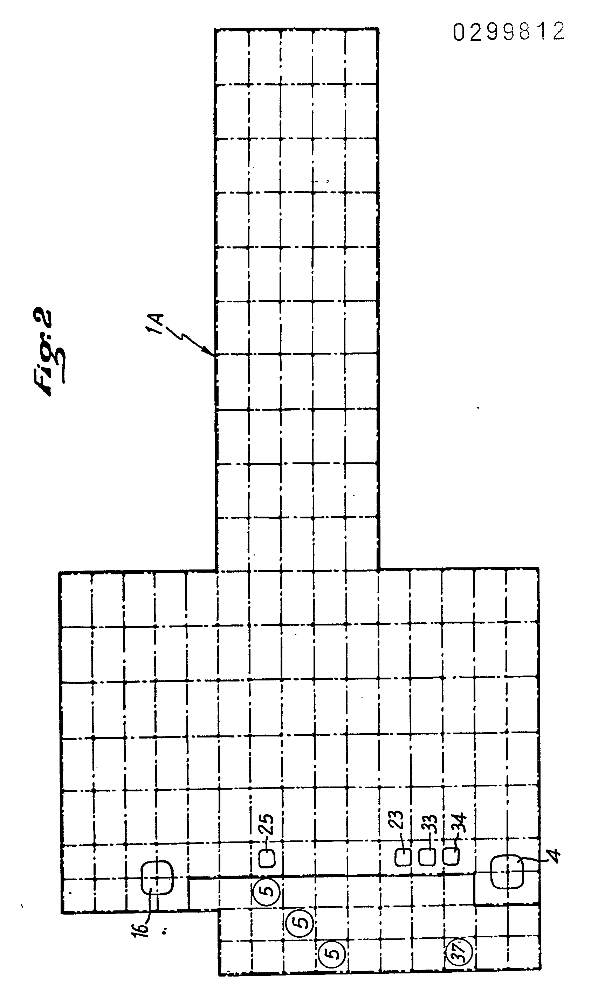

Conformément aux figures 2 et 5, le niveau A de la structure 1 du bâtiment situé au niveau du sol, peut ainsi, recevoir le poids élevé que représente un stockage de pièces détachées en casiers 36 d'une part, ou la presse de compactage 37 des carcasses des véhicules automobiles légers 2 d'autre part. Avantageusement, il sera réservé à ce niveau A tous les services en contact avec l'extérieur de l'unité, qu'il s'agisse des achats ou des services d'expéditions et de ventes sur place ou à l'exportation en vue de satisfaire le marché de la rénovation (flèche V, figure 1). On réservera, en revanche, la place disponible au niveau B juste au-dessous des postes de tests 13 situés au niveau C pour aménager les bureaux pour le personnel gérant l'entreprise avec l'avantage d'une proximité géographique avec les postes clés que constituent les démontages divers.

Enfin, on observera que si les véhicules automobiles légers 2 arrivent en façade avant de la structure 1 du bâtiment, la sortie des carcasses compressées à destination des récupérateurs de métaux, ainsi que toutes les opérations d'achat, de ventes ou de gestion sont également situées en façade avant ; ainsi l'extension éventuelle de l'unité de démolition peut se concevoir, outre en plusieurs postes de 8 heures chacun, par ajout de moules complémentaires juxtaposant par exemple un poste test 13,3 xn postes de démontages 19 et n postes de démontages 30 - n étant un nombre entier quelconque et des postes de sous démontages 26,27,30 et 32 en quantité suffisante, et ce, grâce à un simple allongement du bâtiment sur l'arrière (ce qui peut être facilement obtenu) ; en effet, il est relativement simple de juxtaposer de tels modules puisqu'il suffit de coupler les zones d'accumulation 14,18,29 d'une part, les zones de regroupement 35 pour l'évacuation, d'autre part, avec l'avantage inattendu d'une augmentation supplémentaire du lissage des temps de démolition et par conséquent un gain supplémentaire de productivité. Naturellement, on pourrait d'une manière inverse diminuer les capacités de l'unité de production par suppression de modules. Cette modularité du procédé permet, en outre toutes les possibilités d'ajustement du flux de démontage, sans pour cela sortir du brevet.

**Revendications**

1.-Procédé modulaire de démontage de véhicules automobiles légers pour la récupération de leurs pièces détachées et leur recyclage dans un réseau organisé, caractérisé en ce que par module, la somme des temps de test de convoyage, de démontage, de récupération, de tri, de contionnement et de stockage des pièces de presse et d'évacuation des carcasses, rapportée au nombre de véhicules (2) traités, quelque soit leur état au départ, reste constante sur une période déterminée au moyen :

- d'une part, d'une ligne de convoyage (3) des véhicules automobiles légers (2) faisant se succéder des postes de démontages par lot de pièces (19,26,27,28,30,32) et non par pièces unitaires ;

- et, d'autre part, d'une logistique assurant l'approvisionnement de chaque poste suivant la demande de l'opérateur indépendamment de l'opérateur du poste précédent.

2.- Procédé suivant la revendication 1 caractérisé en ce qu'il est mis en oeuvre dans une structure à trois niveaux fonctionnels (A,B,C) superposés tels que :

- toutes les opérations de convoyages des véhicules automobiles légers (2) s'effectuent au 3e niveau C par des convoyeurs aériens (6,11) suspendus à la charpente (15) de la structure (1), déplaçant les véhicules automobiles légers (2) d'un poste de démontage à un autre, hormis d'une part, l'amenée desdits véhicules automobiles légers (2) auxdits postes qui est effectuée de préférence par ascenseur vertical du type convoyeur à section élévatrice (5) et hormis d'autre part, les opérations de chargement (4) et de déchargement des véhicules automobiles légers (2) qui sont effectuées au sol,

- toutes les opérations de démontage, lavage éventuel et convoyage de pièces détachées sont effectuées au niveau intermédiaire (B),

- toutes les opérations lourdes de stockage (36) des pièces détachées et de presse (37) des carcasses démontées sont effectuées au niveau du sol (A), permettant ainsi une structure (1) compacte plus légère et une offre en vente des pièces détachées facilitée et rationnelle.

3.- Procédé suivant la revendication 2 caractérisé en ce que, par module, la ligne de convoyage (3) prenant en charge les véhicules automobiles légers (2) préalablement triés (101) pour éliminer les épaves impossibles à convoyer, fait se succéder les opérations suivantes :

1) Chargement (4) du véhicules automobiles légers (2) sur une balancelle (6) vide et amenée dudit véhicules automobiles légers (2) sur convoyeur aérien (3) suspendu ;

2) Opération de test (13) par diagnostic auditif, visuel, électronique du véhicules automobiles légers (2) et établissement informatisé de la liste de démontage avec état des pièces ;

3) Récupération des fluides et notamment des huiles et graisses, de l'essence, de l'eau avec antigel ;

4) Démontage (19,30) de toutes les pièces hors moteur, boîtes de vitesses, ponts et roues repérées, par le même opérateur ;

5) Convoyage (20) séparé des pièces détachées ;

6) Démontage (26) des roues et récupération pneus ;

7) Désacouplage (27) des demi-train et des freins puis du moteur, de la boîte de vitesses, du démarreur et les pièces moteurs ;

8) Lavage (28) des pièces récupérées au poste (7) ;

9) Sélection des produits (22) ainsi récupérés qui sont alors conditionnés, stockés (36) et gérés par informatique pour la préparation des commandes (38) ;

10) Presse (37) des carcasses restantes et évacuation vers des récupérateurs de métaux et retour des balancelles (6) vides pour reprise du cycle.

4.- Procédé suivant la revendication 1 caractérisé en ce que par module, chaque opération de démontage (19,30) comporte un certain nombre de postes identiques dépendants de la capacité de l'unité de démontage souhaitée et de l'opération envisagée sur ces postes qui sont disposés en parallèle et alimentés à la demande stricte de chaque opérateur à partir d'une zone d'aiguillage tampon (18,29) destinée à lisser le flux de démontage entre opérations successives.

5.- Procédé suivant l'une quelconque des revendications 1 à 3 caractérisé en ce qu'on utilise les huiles et les carburants récupérés avant démontage pour alimenter les groupes fournissant l'énergie nécessaire pour l'alimentation des convoyeurs (3,20,31) et la climatisation de la structure (1).

6.- Procédé suivant l'une quelconque des revendications précédentes caractérisé en ce qu'il est possible d'ajouter un ou plusieurs modules entiers ou fraction de module pour augmenter la capacité de l'unité, par juxtaposition successive du ou des nouveaux modules, ou fraction de module, dont il suffit de coupler d'une part les alimentations des postes de test et de chacun de leurs postes de démontage (19,30), aux zones d'accumulation (14,18,29) des modules précédents et d'autre part la sortie des postes de démontage (30) à la zone de regroupement et d'évacuation (35) des carcasses, les lignes de convoyage (20,31) des pièces détachées étant de préférence adaptées à chaque module, ou fraction de module, supplémentaire.

7.- Procédé suivant l'une quelconque des revendications précédentes caractérisé en ce que les entrées des véhicules automobiles légers (2) à démonter et les sorties des carcasses pressées se font sur la même face avant de la structure (1) permettant d'accumuler vers l'arrière de ladite structure (1) autant de modules, ou de fraction de module, que nécessaire.

Fig. 1

0299812

Fig.2

0299812

1A

25

23
33
34

5

5

5

16

4

37

Fig:3

0299812

Fig.4

0299812

Fig.5

Fig.6a

Fig.6b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 037 302 (J.M. HOLLANDER)<br>* Figure 1; colonne 5, lignes 8-43; colonne 6, lignes 38-66 *<br>--- | 1-3,7 | B 62 D 65/00 |
| A | US-A-2 953 848 (J.G. CADILLAC et al.)<br>* Figures; colonne 2, ligne 64 - colonne 3, ligne 32 *<br>----- | 1 | |

DOMAINES TECHNIQUES
RECHERCHES (Int. Cl.4)

B 62 D
B 60 S

Le présent rapport a été établi pour toutes les revendications

| Lieu de la recherche | Date d'achèvement de la recherche | Examinateur |
|---|---|---|
| LA HAYE | 21-09-1988 | CHLOSTA P. |

EPO FORM 1503 03.82 (P0402)